# EUROPEAN PATENT APPLICATION

(11) **EP 4 586 468 A1**
(43) Date of publication of application: **16.07.2025**
(21) Application number: 23862798.8
(22) Date of filing: 18.07.2023
(51) Int. Cl.: H02K 3/18, H02K 3/50, H02K 3/52

(54) **STATOR AND MOTOR**

(30) Priority: 09.09.2022 JP 2022143667
(71) Applicant: Minebea Mitsumi Inc., Kitasaku-gun, Nagano 3890293 (JP)
(72) Inventor: MINEMATSU, Yasuhiro, Kitasaku-gun, Nagano 389-0293 (JP)
(74) Representative: Winter, Brandl - Partnerschaft mbB
(86) International application number: PCT/JP2023/026262
(87) International publication number: WO 2024/053254

(57) **Abstract**

To provide a technology for compacting a motor in the axial line direction. A stator includes: a plurality of coil groups (40A, 40B, 50A, 50B, 60A, 60B) arranged in an annular shape; and a substrate (70) including a plurality of wiring layers and provided at one side of the plurality of coil groups along an axial line, the plurality of coil groups (40A, 40B) are provided in the order of a first coil group (40A, 40B), a second coil group (50A, 50B), and a third coil group (60A, 60B) in a circumferential direction (R1), an energizing direction in the first coil group (40A, 40B) is different from an energizing direction in the second coil group (50A, 50B) and the third coil group (60A, 60B). In the first coil group (40A, 40B), the first end part (U3, U21) of the second coil (42) and the first end part (U5, U23) of the third coil (43) are electrically connected to each other at the wiring layer (75), and the second end part (U2, U20) of the first coil (41) and the second end part (U4, U22) of the second coil (42) are electrically connected to each other at the wiring layer (74).

## Description

### Technical Field

The present invention relates to a stator and a motor provided with the stator.

### Background Art

In the related art, a motor provided with a stator having a stator coil annularly and stator circuit substrates provided on both sides of the stator in the axial line direction is known (e.g., Patent Document 1). Each stator coil includes a pin for supplying power to an external device.

### Citation List

### Patent Literature

Patent Document 1: JP 2003-32952 A

### Summary of Invention

### Technical Problem

In the motor described in Patent Document 1, the stator circuit substrate is provided on both sides of the stator in the axial line direction, and the two pins with the end parts of each stator coil drawn out to different sides from each other in the axial line direction. Thus, the motor is bulky in the axial line direction, and there is a demand to make the motor compact especially in the axial line direction.

Thus, the present invention has been made in view of the above problems, and one of the problems is to provide a technology to make the motor compact in the axial line direction.

### Solution to Problem

In order to solve the above problem, a motor according to the present invention, includes: a plurality of coil groups arranged in an annular shape; and a substrate provided at one surface of the plurality of coil groups along an axial line and including a plurality of wiring layers, the plurality of coil groups are provided in the order of a first coil group, a second coil group, and a third coil group in a circumferential direction, an energizing direction in the first coil group is different from an energizing direction in the second coil group and the third coil group, each of the plurality of coil groups includes coils arranged in the order of a first coil, a second coil, and a third coil in the circumferential direction, each of the coils includes two end parts arranged in the order of a first end part and a second end part in the circumferential direction, and in the first coil group, the first end part of the second coil and the first end part of the third coil are electrically connected to each other at a first wiring layer of the plurality of wiring layers and the second end part of the first coil and the second end part of the second coil are electrically connected to each other at a second wiring layer of the plurality of wiring layers.

### Brief Description of Drawings

FIG. 1 is a perspective view illustrating a motor according to the present embodiment.
FIG. 2A is a perspective view illustrating a stator of a motor according to the present embodiment.
FIG. 2B is a perspective view illustrating a stator according to the present embodiment before being covered with resin.
FIG. 3A is an exploded perspective view of a stator according to the present embodiment before being covered with resin.
FIG. 3B is a plan view of the stator in FIG. 3A.
FIG. 4 is an enlarged cross-sectional view of a portion in FIG. 3A along line IV-IV.
FIG. 5A is a plan view illustrating a first wiring layer of a substrate.
FIG. 5B is a plan view illustrating a second wiring layer of a substrate.
FIG. 5C is a plan view illustrating a third wiring layer of a substrate.
FIG. 5D is a plan view illustrating a fourth wiring layer of a substrate.
FIG. 6A is a wiring diagram illustrating a wiring in a coil group of a U-phase according to the present embodiment.
FIG. 6B is a wiring diagram illustrating a wiring in a coil group of a V-phase according to the present embodiment.
FIG. 6C is a wiring diagram illustrating a wiring in a coil group of a W-phase according to the present embodiment.
FIG. 7 is a wiring diagram of the entire stator according to the present embodiment.
FIG. 8 is a wiring diagram illustrating a wiring in a coil group of a U-phase according to a comparative example.

### Description of Embodiments

First, a typical embodiment of the present invention will be outlined. In the following description, as an example, reference signs in the drawings corresponding to components of the present invention are indicated in parentheses.
[1] A stator (1) according to the present embodiment, includes: a plurality of coil groups (40, 50, 60) arranged in an annular shape; and a substrate (70) provided at one side (x1) of the plurality of coil groups (40, 50, 60) along an axial line (x) and including a plurality of wiring layers (72, 73, 74, 75). The plurality of coil groups (40, 50, 60) are provided in the order of a first coil group (40), a second coil group (50), and a third coil group (60) in a circumferential direction (R1), an energizing direction in the first coil group (40) is different from an energizing direction in the second coil group (50) and the third coil group (60), each of the plurality of coil groups (40, 50, 60) includes coils arranged in the order of a first coil (41, 51, 61), a second coil (42, 52, 62), and a third coil (43, 53, 63) in the circumferential direction (R1), and each of the coils (41, 42, 43, 51, 52, 53, 61, 62, 63) includes two end parts arranged in the order of a first end part (U1, U3, U5, U19, U21, U23, W7, W9, W11, W25, W27, W29, V13, V15, V17, V31, V33, V35) and a second end part (U2, U4, U6, U20, U22, U24, W8, W10, W12, W26, W28, W30, V14, V16, V18, V32, V34, V36) in the circumferential direction (R1). In the first coil group (40), the first end part (U3, U21) of the second coil (42) and the first end part (U5, U23) of the third coil (43) are electrically connected to each other at the wiring layer (75), and the second end part (U2, U20) of the first coil (41) and the second end part (U4, U22) of the second coil (42) are electrically connected to each other at the wiring layer (74) different from the wiring layer (75).
[2] In one aspect of the stator (1) according to the above [1], the first end part (U1, U3, U5, U19, U21, U23, W7, W9, W11, W25, W27, W29, V13, V15, V17, V31, V33, V35) and the second end part (U2, U4, U6, U20, U22, U24, W8, W10, W12, W26, W28, W30, V14, V16, V18, V32, V34, V36) are each provided at the substrate (70) side.
[3] In one aspect of the stator (1) according to the above [1] or [2], each of the three coil groups (40, 50, 60) sequentially arranged in the circumferential direction (R) includes an external connection part (79U, 79W, 79V).
[4] In one aspect of the stator (1) according to the above [3], the external connection part (79U, 79W, 79V) is provided at an uppermost layer (72) in the substrate (70), and electrically connected to the lower wiring layer (73) via a conduction hole (72v).
[5] In one aspect of the stator (1) according to any one of the above [1] to [4], an insulating layer (71) is provided between the plurality of wiring layers (72, 73, 74, 75).
[6] In one aspect of the stator (1) according to any one of the above [1] to [5], the plurality of coil groups (40, 50, 60) include a pair of the first coil groups (40A, 40B), a pair of the second coil groups (50A, 50B), and a pair of the third coil groups (60A, 60B), the coil groups of each pair are arranged to be opposed to each other in a radial direction, the pair of the first coil groups (40A, 40B) are electrically connected to each other at the wiring layer (74), and one (40B) of the first coil groups is electrically connected to the third coil groups (60A) at the wiring layer (74).
[7] In one aspect of the stator (1) according to the above [6], in the second coil group (50A, 50B), the first end part (W7, W25) of the first coil (51) and the first end part (W9, W27) of the second coil (52), and the second end part (W10, W28) of the second coil (52) and the second end part (W12, W30) of the third coil (53), are electrically connected to each other at the wiring layer (75), the pair of the second coil groups (50A, 50B) are electrically connected to each other at the wiring layer (73) different from the wiring layers (74, 75), and the second coil group (50B) is electrically connected to the first coil group (40A) at the wiring layer (73).
[8] In one aspect of the stator (1) according to the above [6] or [7], in the third coil group (60A, 60B), the first end part (V13, V31) of the first coil (61) and the first end part (V15, V33) of the second coil (62), and the second end part (V16, V34) of the second coil (62) and the second end part (V18, V36) of the third coil (63), are electrically connected to each other at the wiring layer (75), the pair of the third coil groups (60A, 60B) are electrically connected to each other at the wiring layer (72) different from the wiring layers (73, 74, 75), and one (60B) of the pair of the third coil groups is electrically connected to the second coil group (50A) at the wiring layer (72).
[9] A motor (100) according to the present embodiment, includes: a rotor (110); a plurality of coil groups (40, 50, 60) arranged in an annular shape; and a substrate (70) provided at one side (x1) of the plurality of coil groups (40, 50, 60) along an axial line (x) and including a plurality of wiring layers (72, 73, 74, 75). The plurality of coil groups (40, 50, 60) are arranged in the order of a first coil group (40), a second coil group (50), and a third coil group (60) in a circumferential direction (R1), an energizing direction in the first coil group (40) is different from an energizing direction in the second coil group (50) and the third coil group (60), each of the plurality of coil groups (40, 50, 60) includes coils arranged in the order of a first coil (41, 51, 61), a second coil (42, 52, 62), and a third coil (43, 53, 63) in the circumferential direction (R1), and each of the coils (41, 42, 43, 51, 52, 53, 61, 62, 63) includes two end parts arranged in the order of a first end part (U1, U3, U5, U19, U21, U23, W7, W9, W11, W25, W27, W29, V13, V15, V17, V31, V33, V35) and a second end part (U2, U4, U6, U20, U22, U24, W8, W10, W12, W26, W28, W30, V14, V16, V18, V32, V34, V36) in the circumferential direction (R1). In the first coil group (40), the first end part (U3, U21) of the second coil (42) and the first end part (U5, U23) of the third coil (43) are electrically connected to each other at the wiring layer (75), and the second end part (U2, U20) of the first coil (41) and the second end part (U4, U22) of the second coil (42) are electrically connected to each other at the wiring layer (74) different from the wiring layer (75).

Embodiments of the present invention will be described below with reference to the drawings. Note that hereinafter, the drawings are schematic and the dimensional relationships, proportions, and the like between elements in the drawings may differ from reality. Among the drawings, parts having mutually different dimensional relationships, proportions, and the like may be included.

### Configuration of Motor

A motor 100 according to the present embodiment is, for example, an internally rotating brushless DC motor with 3 phases (U, V and W-phases) set, and controls the rotation by supplying power to the coils of each phase at appropriate timing. The specific configuration of the motor 100 will be described in detail below.

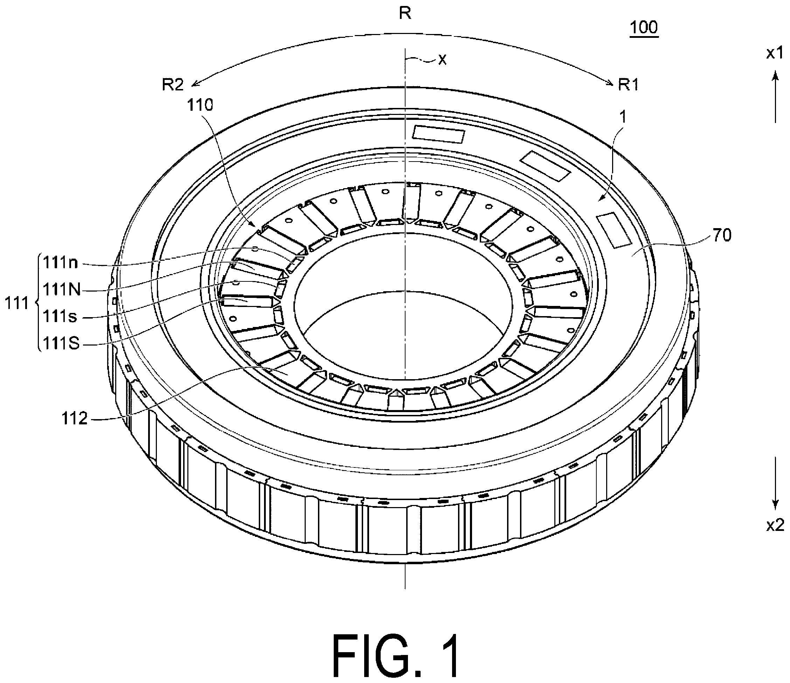

FIG. 1 is a perspective view for illustrating the motor 100 according to the present embodiment. The motor 100 includes a rotor 110, a rotation axis (not illustrated), and a stator 1. The rotor 110 is cylindrical. A rotation axis penetrates the center of the rotor 110. The rotor 110 and the rotation axis are integrally molded by injection molding. For convenience of description, one side of the motor 100 is referred to as "upper side x1" and the other side is referred to as "lower side x2" in the axial line x as the rotation center of the rotation axis. In the drawing, the clockwise direction is referred to as a "circumferential direction R1" and the counterclockwise direction is referred to as a "circumferential direction R2", in a "circumferential direction R" of the axial line x.

In the radial direction, the rotor 110 is arranged inside the stator 1 described below. The rotor 110 includes a plurality of magnets 111S, 111N, 111s, 111n (also simply called "magnet 111") with different magnetic poles, and a rotor core 112.

The magnet 111 is embedded in the rotor core 112. The magnets 111S and 111N are provided alternately radially at a predetermined interval in the circumferential direction R at the rotor core 112, for example. The magnet 111s and 111n with different magnetic pole are also provided alternately between the magnet 111 S and 111N. The magnet 111 is formed of rare earth magnet such as neodymium magnet. Bond magnet or sintered magnet may be used for the magnet 111. The magnet 111 is not limited in shape, and cylindrical magnet and polygonal magnet may be used.

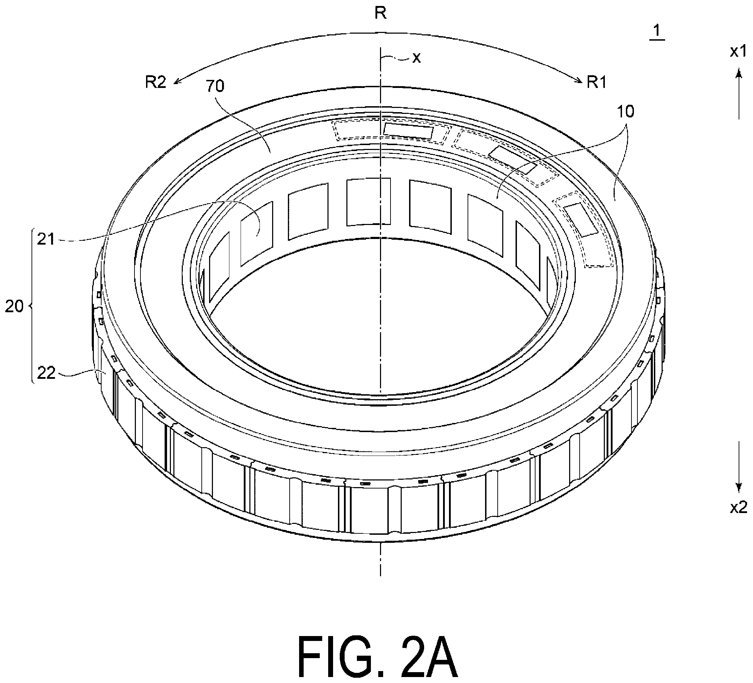

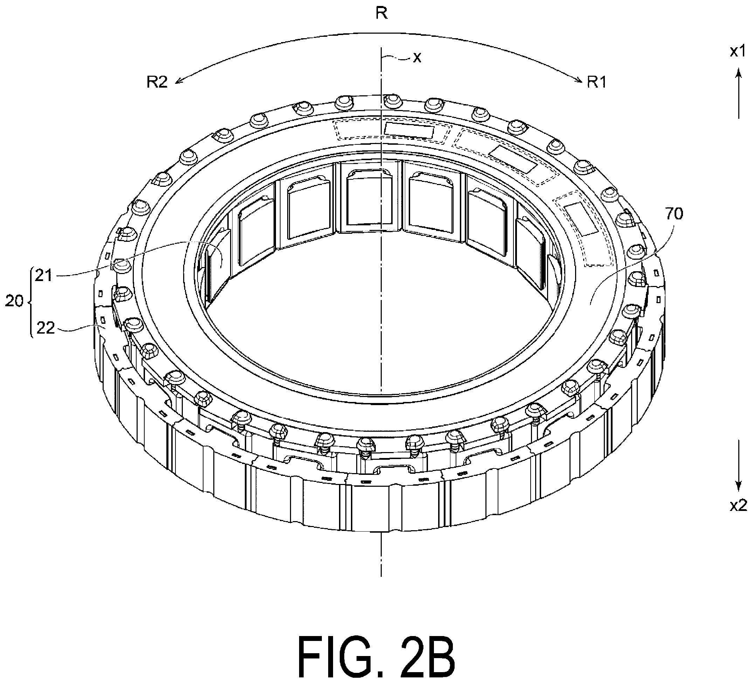

FIG. 2A is a perspective view for describing the stator 1 of the motor 100 according to the present embodiment. FIG. 2B is a perspective view illustrating the stator 1 according to the present embodiment before being covered with resin. The stator 1 is provided at the outer peripheral side of the rotor 110. AC power is supplied to the stator 1 from, for example, an inverter circuit (not illustrated). The stator 1 is covered with resin material 10. The stator 1 includes a stator core 20, an insulator 30, a plurality of coil groups 40, 50, and 60, and a multilayer substrate 70.

The stator core 20 is annularly arranged along, for example, the circumferential direction R. The stator core 20 is formed by stacking, in the axial direction, a plurality of plate-like metal members, for example, silicon steel plates, soft magnetic steel plates such as electromagnetic steel plates, and the like. The stator core 20 includes an inner peripheral part 21 facing the rotor 110, and an outer peripheral part 22.

The insulator 30 is formed of an insulator such as resin. The insulator 30 covers the stator core 20 from an upper side x1 and lower side x2 in the axial line x. The insulator 30 includes an inner peripheral part 31 and an outer peripheral part 32.

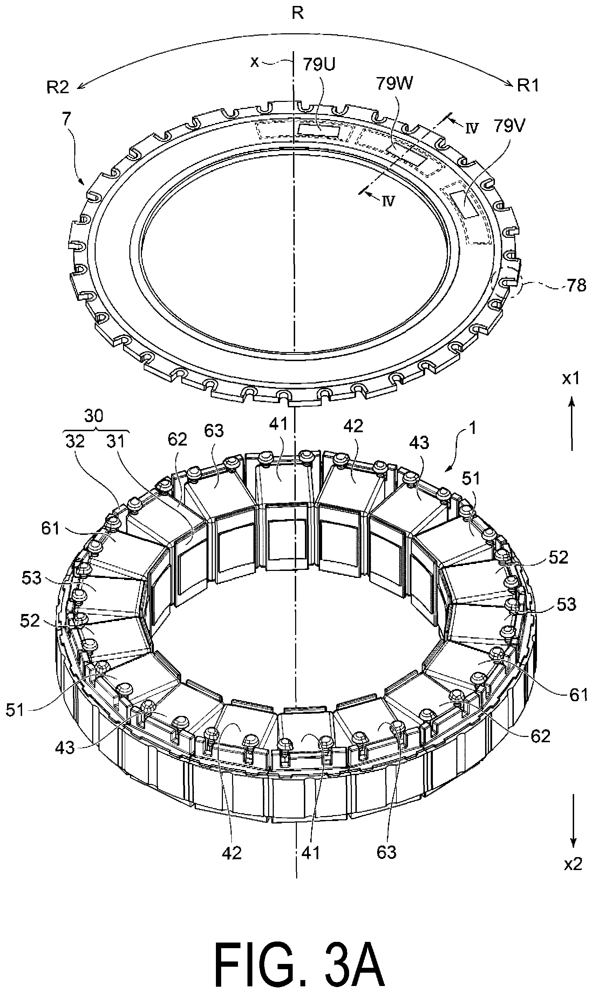

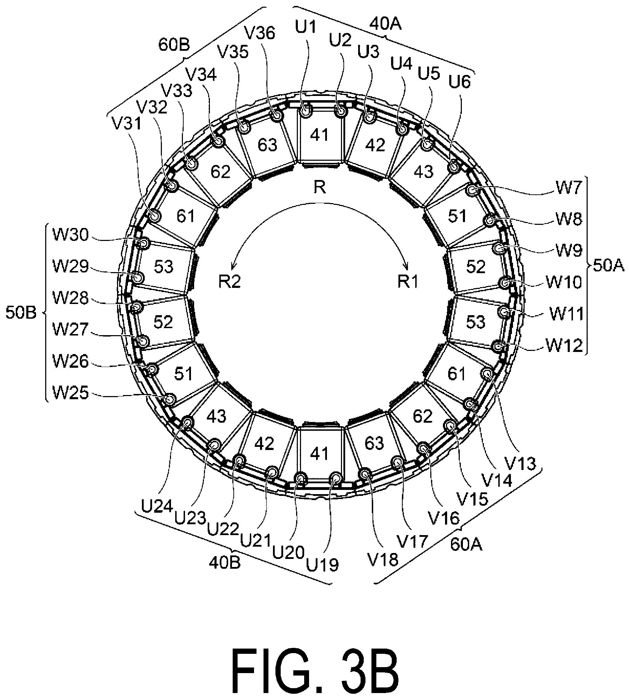

FIG. 3A is an exploded perspective view of the stator 1 according to the present embodiment before being covered with resin. FIG. 3B is a plan view of the stator 1 in FIG. 3A. A plurality of coil groups 40A, 40B, 50A, 50B, 60A, 60B are continuously provided in the circumferential direction R of the stator 1. The coil groups 40 constitute the U-phase (first phase), and at the stator 1, the two coil groups 40A, 40B are provided at opposed positions in the radial direction. The coil groups 50A, 50B constitute the W-phase (second phase), and at the stator 1, the two coil groups 50A, 50B are provided at opposed positions in the radial direction. The coil groups 60A, 60B constitute the V-phase (third phase), and at the stator 1, the two coil groups 60A, 60B are provided at opposed positions in the radial direction. Hereinafter, "coil groups 40A, 40B", "coil groups 50A, 50B", and "coil groups 60A, 60B" are collectively referred to simply as "coil groups 40,50 and 60".

In the motor 100, the coil groups 40, 50 and 60 are star-connected to each other, for example. In the stator 1, the coil groups 40,50 and 60 are annularly arranged in the order of the coil group 40, coil group 50, coil group 60, coil group 40, coil group 50 and coil group 60 in the circumferential direction R1.

The coil group 40A and 40B each includes a first coil 41, a second coil 42 and a third coil 43 (hereinafter also collectively referred to as "coils 41, 42 and 43"). In the coil group 40, the coil 41, coil 42, and coil 43 are arranged in the order in the circumferential direction R1.

The coils 41,42 and 43 are formed by winding conductors around the stator 1 through the insulator 30. The coils 41,42 and 43 in the coil group 40A have first terminals (first end parts) U1, U3 and U5, and second terminals (second end parts) U2, U4 and U6, respectively (hereinafter also collectively referred to as "terminals U1, U2, U3, U4, U5, U6"). The terminals U1, U2, U3, U4, U5, and U6 are drawn as leader lines to the upper side x1.

The coils 41,42 and 43 in the coil group 40B have first terminals (first end parts) U19, U21 and U23, and second terminals (second end parts) U20, U22, and U24, respectively (hereinafter also collectively referred to as "terminals U19, U20, U21, U22, U23, and U24"). The terminals U19, U20, U21, U22, U23, and U24 are drawn as leader lines to the upper side x1.

In the coil group 40A, at the coils 41, 42 and 43, the first terminals U1, U3, U5 and the second terminals U2, U4, and U6, are arranged alternately in the circumferential direction R1, respectively. In the coil group 40B, at the coils 41, 42, and 43, the first terminals U19, U21, U23 and the second terminals U20, U22, and U24, are arranged alternately in the circumferential direction R1, respectively.

The coils 51,52 and 53 are formed by winding conductors around the stator 1 through the insulator 30. The coils 51, 52 and 53 in the coil group 50A have first terminals (end parts) W7, W9 and W11, and second terminals (end parts) W8, W10 and W12, respectively (hereinafter also collectively referred to as "terminals W7, W8, W9, W10, W11, W12"). The terminals W7, W8, W9, W10, W11, W12 are drawn as leader lines to the upper side x1.

The coils 51, 52 and 53 in the coil group 50B have first terminals (end parts) W25, W27, W29 and second terminals (end parts) W26, W28, W30, respectively (hereinafter also collectively referred to as "terminals W25, W26, W27, W28, W29, W30"). The terminals W25, W26, W27, W28, W29, W30 are drawn as leader lines to the upper side x1.

In the coil group 50A, at the coils 51, 52, and 53, the first terminals W7, W9, W11, and the second terminals W8, W10, W12, arranged alternately in the circumferential direction R1, respectively. In the coil group 50B, at the coils 51,52, and 53, the first terminals W25, W27, W29, and the second terminals W26, W28, W30, arranged alternately in the circumferential direction R1, respectively.

In the coil group 60A, at the coils 61, 62, and 63, the first terminals V13, V15, V17, and the second terminals V14, V16, V18, are arranged alternately in the circumferential direction R1, respectively. In the coil group 60B, at the coils 61, 62, and 63, the first terminals V31, V33, V35, and the second terminals V32, V34, V36, are arranged alternately in the circumferential direction R1, respectively.

The coils 61,62, and 63 are formed by winding conductors around the stator 1 through the insulator 30. The coils 61, 62, and 63 in the coil group 60A have first terminals (end parts) V13, V15, and V17, and second terminals (end parts) V14, V16, and V18, respectively (hereinafter also collectively referred to as "terminals V13, V14, V15, V16, V17, V18"). The terminals V13, V14, V15, V16, V17, and V18 are drawn as leader lines to the upper side x1.

The coils 61, 62, and 63 in the coil group 60B have first terminals (end parts) V31, V33, and V35, and second terminals (end parts) V32, V34, and V36, respectively (hereinafter also collectively referred to as "terminals V31, V32, V33, V34, V35, V36"). The terminals V31, V32, V33, V34, V35, and V36 are drawn as leader lines to the upper side x1.

In the coil group 60A, at the coils 61, 62, and 63, the first terminals V13, V15, V17, and the second terminals V14, V16, V18, are arranged alternately in the circumferential direction R1, respectively. In the coil group 60B, at the coils 61, 62, and 63, the first terminals V31, V33, V35, and the second terminals V32, V34, V36, are arranged alternately in the circumferential direction R1, respectively.

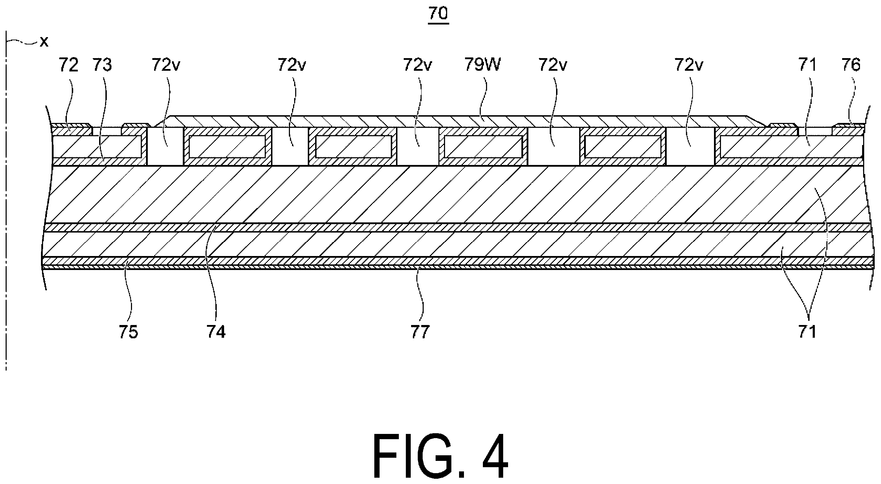

FIG. 4 is an enlarged cross-sectional view of a portion in FIG. 3A along line IV-IV. In the present embodiment, in the coil groups 40, 50 and 60, the substrate 70 is provided only at the side with the terminals U1 to U6, W7 to W12, V13 to V18, U19 to U24, W25 to W30, and V31 to V36 drawn out, that is, at the upper side x1 of the motor 100. When the terminals U1 to U6, W7 to W12, V13 to V18, U19 to U24, W25 to W30, and V31 to V36 are drawn out toward the lower side x2, the substrate 70 is provided at the lower side x2 of the motor 100.

The substrate 70 includes an insulating layer 71 and wiring layers 72, 73, 74 and 75. The insulating layer 71 is formed of an insulating resin material such as epoxy. The wiring layers 72, 73, 74 and 75 are formed of a metal or the like. The substrate 70 is a connection substrate having copper wiring (hereinafter also called "conductor passage") formed by alternately stacking the insulating layer 71 and the wiring layers 72,73,74 and 75 along the axial line x.

The substrate 70 includes a plurality of lands 78 and pads (external connection parts) 79U, 79W, 79V. The lands 78 are formed of electrically conductive members and are electrically connectable connections to the conductive terminals U1 to U6, W7 to W12, V13 to V18, U19 to U24, W25 to W30, V31 to V36, drawn from the coils 41, 42, 43, 51, 52, 53, 61, 62, 63, respectively.

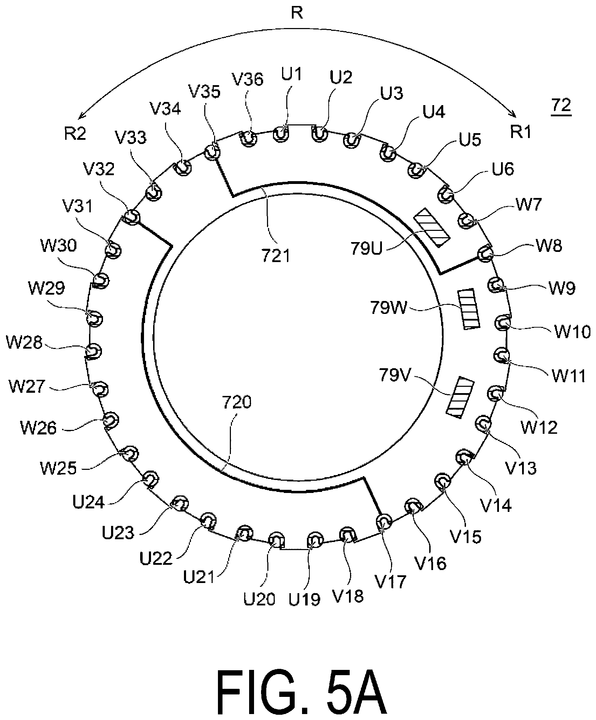

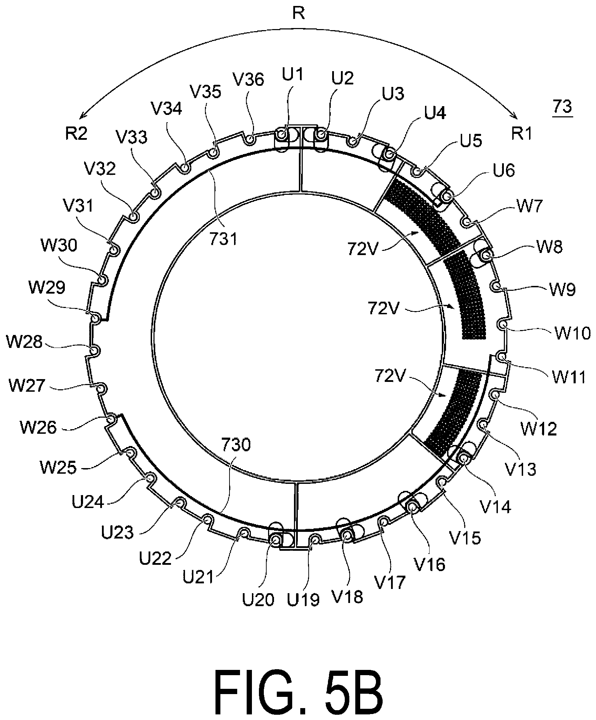

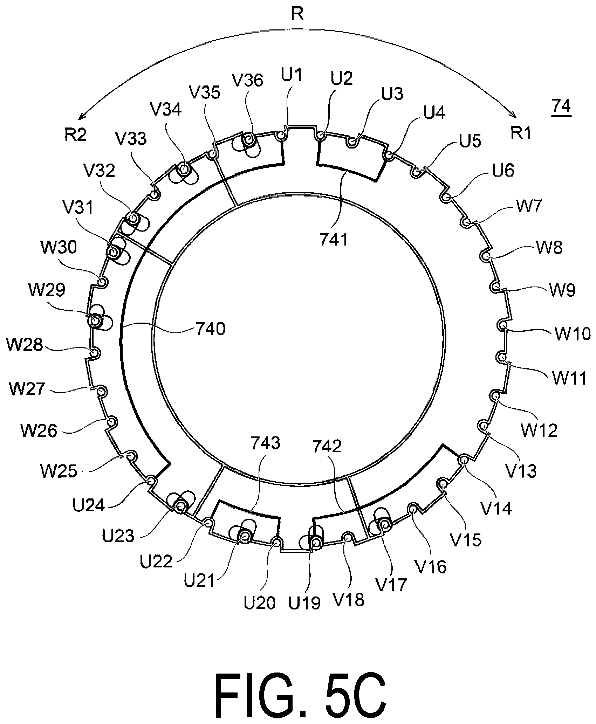

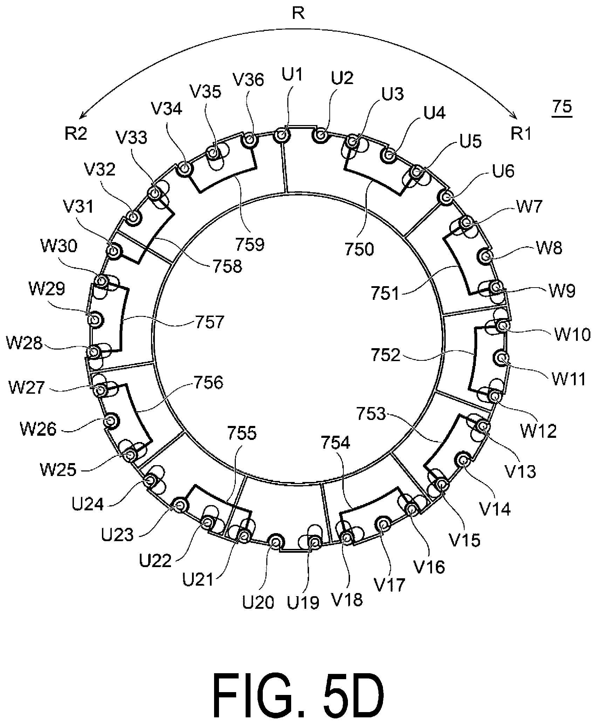

FIG. 5A is a plan view illustrating a first wiring layer 72 of the substrate 70. FIG. 5B is a plan view illustrating a second wiring layer 73 of the substrate 70. FIG. 5C is a plan view illustrating a third wiring layer 74 of the substrate 70. FIG. 5D is a plan view illustrating a fourth wiring layer 75 of the substrate 70. In the present embodiment, among the four wiring layers 72, 73, 74, and 75, the wiring layer 72 is the wiring layer (fourth wiring layer) located at the most upper side x1 along the axial line x.

The surface of the wiring layer 72 facing the upper side x1 has, for example, an insulating coating part 76 covered with a resist or the like. The wiring layer 72 includes pads 79U, 79W, and 79V. The pads 79U, 79W, and 79V (hereinafter also referred to simply as "pad 79") are formed at the center part of the wiring layer 72 in the radial direction and are exposed to the outside from the coating part 76. The pad 79 is an external connection part connected to an external device, and power for driving the motor 100 is supplied from an external device through the pad 79. The pad 79U supplies power to the motor 100 in the coil groups 40A, 40B constituting the U-phase, the pad 79W supplies power to the motor 100 through the coil groups 50A, 50B constituting the W-phase, and the pad 79V supplies power to the motor 100 through the coil groups 60A, 60B constituting the V-phase. The pads 79U, 79W, and 79V are provided in the successive coil groups 40, 50, and 60 in the circumferential direction R1, respectively.

In the radial direction, logos, characters, symbols, or the like (not illustrated) can be written at the center part of the coating part 76 by, for example, a film (silk) formed at a certain range on the substrate by screen printing using non-conductive ink. The center part may have only a non-forming region without silk.

The wiring layer 72 includes a plurality of conductor passages 720, 721. The conductor passage 720 electrically connects the terminal V17 of the coil 63 of the coil group 60A to the terminal V32 of the coil 61 of the coil group 60B. The conductor passage 721 electrically connects the terminal V35 of the coil 63 of the coil group 60B to the terminal W8 of the coil 51 of the coil group 50A.

The wiring layer 73 is a wiring layer (third wiring layer) located at the immediately lower side x2 of the wiring layer 72. The wiring layer 72 and the wiring layer 73 are electrically connected via a plurality of conduction holes 72v formed as vias. The conduction holes 72v are provided at least beyond the region with the pad 79 provided, in the circumferential direction R. In other words, the power supplied through the pads 79 is supplied to the respective coil groups 40, 50, and 60 at the wiring layer 73 of the substrate 70. Specifically, the pad 79U is electrically connected to the terminal U6 of the coil 43 of the coil group 40A at the wiring layer 73. The pad 79W is electrically connected to the terminal W8 of the coil 51 of the coil group 50A at the wiring layer 73. The pad 79V is electrically connected to the terminal V14 of the coil 61 of the coil group 60A at the wiring layer 73.

The wiring layer 73 includes a plurality of conductor passages 730,731. The conductor passage 730 electrically connects the terminal W11 of the coil 53 of the coil group 50A with the terminal W26 of the coil 51 of the coil group 50B. The conductor passage 731 electrically connects the terminal W29 of the coil 53 of the coil group 50B with the terminal U6 of the coil 43 of the coil group 40A.

The wiring layer 74 is a wiring layer (second wiring layer) located at the immediately lower side x2 of the wiring layer 73. The wiring layer 74 includes a plurality of conductor passages 740, 741, 742, 743. The conductor passage 740 electrically connects the terminal U1 of the coil 41 of the coil group 40A with the terminal U24 of the coil 43 of the coil group 40B. The conductor passage 741 electrically connects the terminal U2 of the coil 41 of the coil group 40A with the terminal U4 of the coil 42 of the coil group 40A. The conductor passage 742 electrically connects the terminal V14 of the coil 61 of the coil group 60A with the terminal U19 of the coil 41 of the coil group 40B. The conductor passage 743 electrically connects the terminal U20 of the coil 41 of the coil group 40B to the terminal U22 of the coil 42 of the coil group 40B.

The wiring layer 75 is a wiring layer (first wiring layer) located at the immediately lower side x2 of the wiring layer 74. The wiring layer 75 includes a plurality of conductor passages 750, 751, 752, 753, 754, 755, 756, 757, 758, 759. The conductor passage 750 electrically connects the terminal U3 of the coil 42 of the coil group 40A with the terminal U5 of the coil 43 of the coil group 40A. The conductor passage 751 electrically connects the terminal W7 of the coil 51 of the coil group 50A with the terminal W9 of the coil 52 of the coil group 50A. The conductor passage 752 electrically connects the terminal W10 of the coil 52 of the coil group 50A with the terminal W12 of the coil 53 of the coil group 50A. The conductor passage 753 electrically connects the terminal V13 of the coil 61 of the coil group 60A with the terminal V15 of the coil 63 of the coil group 60A. The conductor passage 754 electrically connects the terminal V16 of the coil 52 of the coil group 60A with the terminal V18 of the coil 63 of the coil group 60A. The conductor passage 755 electrically connects the terminal U21 of the coil 42 of the coil group 40B with the terminal U23 of the coil 43 of the coil group 40B. The conductor passage 756 electrically connects the terminal W25 of the coil 51 of the coil group 50B with the terminal W27 of the coil 52 of the coil group 50B. The conductor passage 757 electrically connects the terminal W28 of the coil 52 of the coil group 50B with the terminal W30 of the coil 53 of the coil group 50B. The conductor passage 758 electrically connects the terminal V31 of the coil 61 of the coil group 60B with the terminal V33 of the coil 63 of the coil group 60B. The conductor passage 759 electrically connects the terminal V34 of the coil 52 of the coil group 60B with the terminal V36 of the coil 63 of the coil group 60B.

The surface of the wiring layer 75 facing the lower side x1 has, for example, an insulating coating part 77 covered with a resist or the like.

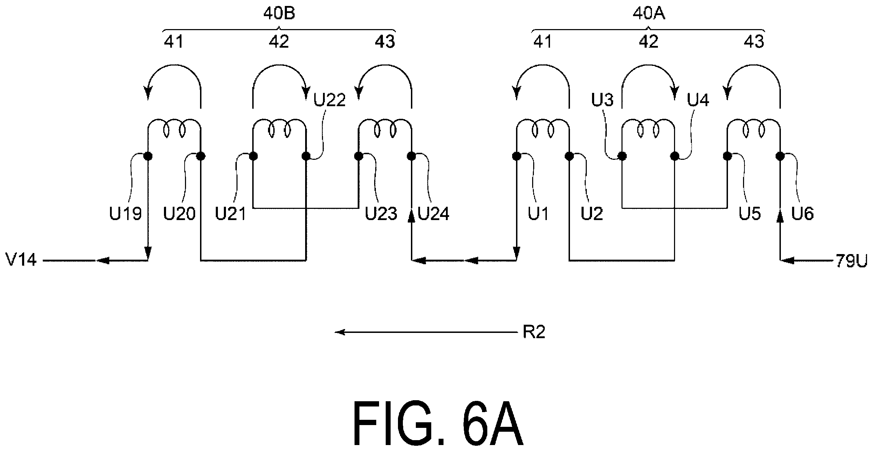

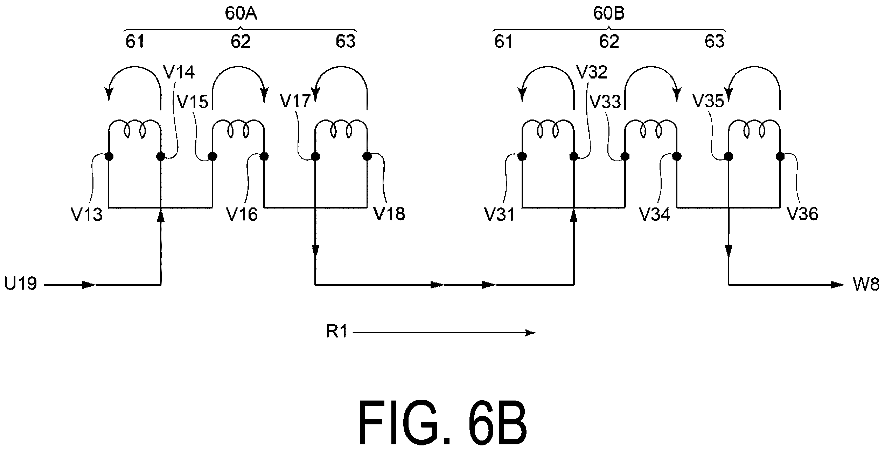

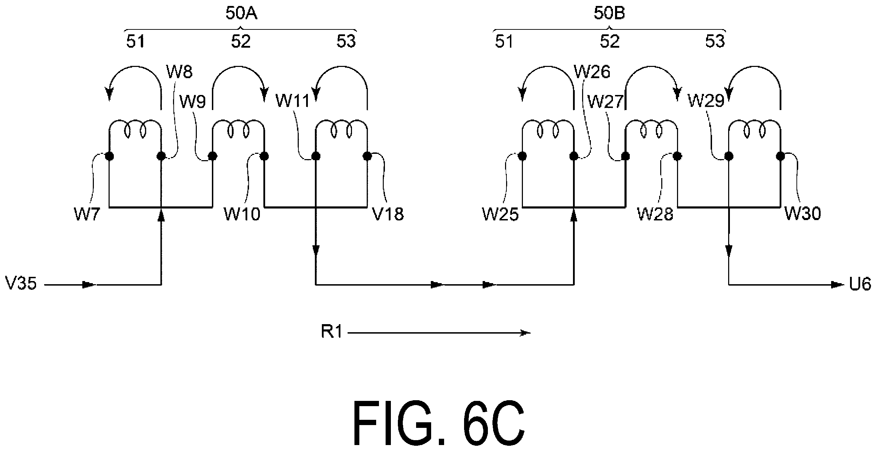

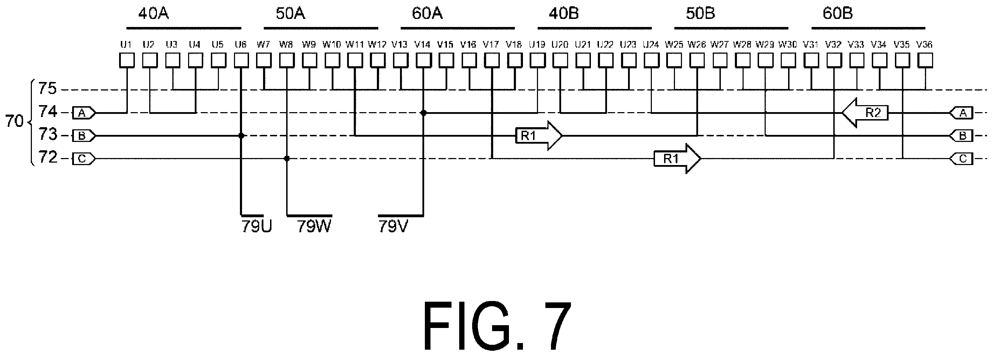

Next, the energizing direction (wiring direction) of each coil group 40,50 and 60 will be described. Hereinafter, an example will be described when current is supplied to the pad 79U. FIG. 6A is a wiring diagram of the U-phase coil group 40 according to the present embodiment. FIG. 6B is a wiring diagram illustrating a coil group 50 of a W-phase according to the present embodiment. FIG. 6C is a wiring diagram of the V-phase coil group 60 according to the present embodiment. FIG. 7 is a wiring diagram of the entire stator 1 according to the present embodiment.

In the present embodiment, the direction of the current in the first coil groups 40A and 40B constituting the U-phase is the circumferential direction R2. For example, the current supplied from the pad 79U to the coil group 40A flows through the coil group 40A in the order of the terminal U6, terminal U5, terminal U3, terminal U4, terminal U2, and terminal U1, and then flows from the terminal U1 toward the terminal U24 of the coil group 40B. The current supplied to the terminal U24 of the coil group 40B flows through the coil group 40B in the order of the terminal U23, terminal U21, terminal U22, terminal U20, and terminal U19, and then flows toward the terminal V14 of the coil group 60A.

In the first coil groups 40A and 40B, the terminal U5 and the terminal U3, and the terminal U23 and the terminal U21, are connected at the wiring layer 75, and the terminal U4 and the terminal U2, and the terminal U22 and the terminal U20, are connected at the wiring layer 74. The terminal U19, and the terminal V14 of the coil group 60A are connected at the wiring layer 74.

On the other hand, the direction of the current in the second coil groups 50A, 50B, 60A, 60B constituting the W-phase and V-phase, is opposite to the direction of the current in the first coil groups 40A, 40B, and is the circumferential direction R1. The current supplied to the terminal V14 of the coil group 60A flows through the coil group 60A in the order of the terminal V13, terminal V15, terminal V16, terminal V18, and terminal V17, and then goes from the terminal V17 toward the terminal V32 of the coil group 60B. The current supplied to the terminal V32 of the coil group 60B flows through the coil group 60B in the order of the terminal V31, terminal V33, terminal V34, terminal V36, and terminal V35, and then goes toward the terminal W8 of the coil group 50A.

In the third coil groups 60A, 60B, the terminal V13 and terminal V15, the terminal V16 and terminal V18, the terminal V31 and terminal V33, and the terminal V34 and terminal V36 are connected at the wiring layer 75. The terminal V17 and terminal V32, and the terminal V35 and terminal W8 of the coil group 50A are connected at the wiring layer 72.

The current supplied to the terminal W8 of the coil group 50A flows through the coil group 50A in the order of the terminal W7, terminal W9, terminal W10, terminal W12, and terminal W11, and then goes from the terminal W11 toward the terminal W26 of the coil group 50B. The current supplied to the terminal W26 of the coil group 50B flows through the coil group 50B in the order of the terminal W25, terminal W27, terminal W28, terminal W30, and terminal W29, and then goes toward the terminal U6 of the coil group 40A.

In the second coil groups 50A and 50B, the terminal W7 and terminal W9, the terminal W10 and terminal W12, the terminal W25 and terminal W27, and the terminal W28 and terminal W30 are connected at the wiring layer 75. The terminal W11 and terminal W26, and the terminal W29 and terminal U6 of the coil group 40A are connected at the wiring layer 73.

The current path in the case with the current supplied to the pads 79W and 79V by the operation of the switch, can be understood from FIG. 7.

According to the motor 100 having the stator 1 in the present embodiment as described above, the substrate 70 only needs to be provided in the upper side x1 of the motor 100 in the direction along the axial line x, so that the motor 100 can be made compact along the axial line x. Furthermore, at the motor 100, the energizing (wiring) direction in the coil groups 40A and 40B is circumferential direction R2, and the energizing (wiring) direction in the coil groups 50A, 50B, 60A and 60B is the circumferential direction R1.

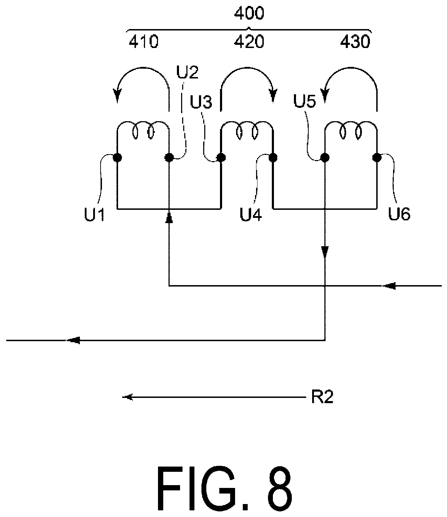

While keeping the energizing direction in the coil groups 40A and 40B and the energizing direction in the coil groups 50A, 50B, 60A and 60B reversed, it is desired to reduce increase of the number of the wiring layers for electrically connecting the coils 41,42 and 43 together in the coil groups 40A and 40B in particular. FIG. 8 is a wiring diagram of a coil group 400 in the U-phase of the comparative example.

For example, even when the energizing direction of the coil group 400 of the U-phase in the comparative example is the same as the energizing direction of the coil groups 40A and 40B, a configuration is possible with the current energized in the order of a coil 410, coil 420, and coil 430. In this case, the current enters from terminal U2 of the coil 410, and passes through the terminal U1, terminal U3 and the terminal U4 of the coil 420, and the terminal U6 and terminal U5 of the coil 430 in order. The coil group 400 in the comparative example requires a total of three wiring layers: a wiring layer electrically connecting the pad 79U with the terminal U2; a wiring layer electrically connecting the terminal U1 with the terminal U3, and the terminal U4 with the terminal U6; and a wiring layer electrically connecting the terminal U5 with terminals of other coil groups.

The conductor passage connecting the terminal U5 of the coil 430 with other coil groups, and the conductor passage connecting the pad 79U with the terminal U2 of the coil 410 and being required to be extended to the side of the coil 410, cannot be crossed at the same wiring layer. Thus, each conductor passage is required to pass through different wiring layer from each other, and the number of wiring layers increases in the coil group 400 of the U-phase. In the case of the stator with the coil group 400 according to the comparative example, the substrate has not less than 5 wiring layers in relation with the wiring layers of other coil groups of the W and V-phases.

On the other hand, in the above-described embodiment, the direction of the currents in the coil groups 40A and 40B is directed from the side of the third coil 43 toward the first coil 41, so that the terminals U5 and U23 of the coil 43 and the terminals U3 and U21 of the coil 42 are electrically connected at the wiring layer 75 through the conductor passage 755, and the terminals U4 and U22 of the coil 42 and the terminals U2 and U20 of the coil 41 are electrically connected at the wiring layer 74 through the conductor passage 743.

Thus, even when the current direction in the coil groups 40A and 40B is opposite to the energizing direction in the coil groups 50A, 50B, 60A and 60B, the U-phase coil groups 40A and 40B are wired through only the two wiring layers 74 and 75, and the substrate 70 is composed of a total of 4 wiring layers 72, 73, 74 and 75 in all the coil groups 40, 50 and 60. This enables to reduce the thickness of the substrate 70 by preventing the multilayer structure, and to reduce the cost.

Further, the terminals U1 to U6, U19 to U24, W7 to W12, W25 to W30, V13 to V18, and V31 to V36 in the coil groups 40, 50 and 60, when drawn out to any side (upper side x1 or lower side x2) along the axial line x, can be connected to the substrate 70, thereby improving productivity.

Furthermore, the coil groups 40, 50, and 60 having different wiring circuits can be adopted for the substrate 70, so that variations of wiring circuits are increased, and the degree of freedom in design is improved.

### Others

Although the preferred embodiments of the present invention have been described above, the present invention is not limited to the above-described embodiments, and includes all aspects included in the concepts and claims of the present invention. Further, the respective configurations may be selectively combined appropriately so as to achieve at least a part of the problems and effects described above. Further, for example, the shapes, materials, arrangements, sizes, or the like of the respective components in the above-described embodiments, may be appropriately changed according to the specific usage of the present invention. For example, in the above-described embodiments, the energizing direction in the coil groups 40A and 40B is the counterclockwise circumferential direction R2, but may be the clockwise circumferential direction R1. In this case, the energizing direction in the coil groups 50A, 50B, 60A, and 60B may be only required to be the counterclockwise circumferential direction R2.

In addition, the configuration of the coil group 40 in the above-described embodiments may be applied to the coil group 50 or 60, and the configurations of the coil groups 50 and 60 may be applied to the coil group 40, so that, for example, the coil group 40 may constitute the V-phase, the coil group 50 may constitute the U-phase, and the coil group 60 may constitute the W-phase.

### Reference Signs List

1 Stator, 40, 50, 60 Coil group, 41, 42, 43, 51, 52, 53, 61, 62, 63 Coil, U1, U3, U5, U19, U21, U23, W7, W9, W11, W25, W27, W29, V13, V15, V17, V31, V33, V35 First terminal (First end part), U2, U4, U6, U20, U22, U24, W8, W10, W12, W26, W28, W30, V14, V16, V18, V32, V34, V36 Second terminal (Second end part), 70 Substrate, 72 Wiring layer (Fourth wiring layer), 73 Wiring layer (Third wiring layer), 74 Wiring layer (Second wiring layer),75 Wiring layer (First wiring layer), 79U, 79W, 79V Pad (External connection part), 100 Motor, 110 Rotor

## Claims

1. A stator, comprising:
a plurality of coil groups arranged in an annular shape; and
a substrate provided at one surface of the plurality of coil groups along an axial line and including a plurality of wiring layers, wherein
the plurality of coil groups are provided in an order of a first coil group, a second coil group, and a third coil group in a circumferential direction,
an energizing direction in the first coil group is different from an energizing direction in the second coil group and the third coil group,
each of the plurality of coil groups includes coils arranged in an order of a first coil, a second coil, and a third coil in the circumferential direction, and
each of the coils includes two end parts arranged in an order of a first end part and a second end part in the circumferential direction,
wherein in the first coil group, the first end part of the second coil and the first end part of the third coil are electrically connected to each other at a first wiring layer of the plurality of wiring layers, and the second end part of the first coil and the second end part of the second coil are electrically connected to each other at a second wiring layer of the plurality of wiring layers.

2. The stator according to claim 1, wherein
each of the first end part and the second end part is provided at a side close to the substrate.

3. The stator according to claim 1, wherein
each of the three coil groups sequentially arranged in the circumferential direction includes an external connection part.

4. The stator according to claim 3, wherein
the external connection part is provided at an uppermost layer in the substrate and electrically connected to a lower layer via a through hole.

5. The stator according to claim 1, wherein an insulating layer is provided between the plurality of wiring layers.

6. The stator according to claim 1, wherein the plurality of coil groups include a pair of the first coil groups, a pair of the second coil groups, and a pair of the third coil groups, the coil groups of each pair are arranged to be opposed to each other in a radial direction,
the pair of the first coil groups are electrically connected to each other at the second wiring layer, and
one of the pair of the first coil groups is electrically connected to the second coil group or the third coil group at the second wiring layer.

7. The stator according to claim 6, wherein
in the second coil group, the first end part of the first coil and the first end part of the second coil, and the second end part of the second coil and the second end part of the third coil are electrically connected to each other at the first wiring layer,
the pair of the second coil groups are electrically connected to each other at a third wiring layer of the plurality of wiring layers, and
one of the pair of the second coil groups is electrically connected to the first coil group at the third wiring layer.

8. The stator according to claim 7, wherein
in the third coil group, the first end part of the first coil and the first end part of the second coil, and the second end part of the second coil and the second end part of the third coil are electrically connected to each other at the first wiring layer,
the pair of the third coil groups are electrically connected to each other at a fourth wiring layer of the plurality of wiring layers, and
one of the pair of the third coil groups is electrically connected to the second coil group at the fourth wiring layer.

9. A motor, comprising:
a rotor; and
a stator surrounding the rotor from an outside, including a plurality of coil groups, and having an annular shape, the plurality of coil groups being arranged in an order of a first coil group, a second coil group, and a third coil group in a circumferential direction, wherein
the stator includes a substrate having a plurality of wiring layers and provided at one surface,
an energizing direction in the first coil group is different from an energizing direction in the second coil group and the third coil group,
each of the plurality of coil groups includes a plurality of coils arranged in an order of a first coil, a second coil, and a third coil in the circumferential direction, and
each of the plurality of coils includes two end parts arranged in an order of a first end part and a second end part in the circumferential direction, and
wherein in the first coil group, the first end part of the second coil and the first end part of the third coil are electrically connected to each other at a first wiring layer of the plurality of wiring layers, and the second end part of the first coil and the second end part of the second coil are electrically connected to each other at a second wiring layer of the plurality of wiring layers.
